# EUROPÄISCHE PATENTSCHRIFT

(11) **EP 1 159 560 B1**
(45) Veröffentlichungstag und Bekanntmachung des Hinweises auf die Patenterteilung: **15.12.2004**
(21) Anmeldenummer: 00914101.1
(22) Anmeldetag: 02.03.2000
(51) Int. Cl.: F16L 55/38

(54) **PIPELINEREPARATUR-HILFSVORRICHTUNG**
AUXILIARY DEVICE FOR REPAIRING A PIPELINE
DISPOSITIF AUXILIAIRE DE REPARATION D'UN PIPELINE

(30) Priorität: 05.03.1999 DE 19909634
(43) Veröffentlichungstag der Anmeldung: 05.12.2001
(73) Patentinhaber: Willschütz, Klaus-Dieter, 48268 Greven (DE)
(72) Erfinder: WILLSCHÜTZ, Klaus-Dieter, D-48268 Greven (DE); WILLSCHÜTZ, Hans-Georg, D-01277 Dresden (DE)
(86) Internationale Anmeldenummer: PCT/EP2000/001776
(87) Internationale Veröffentlichungsnummer: WO 2000/053969

(56) Entgegenhaltungen:
- WO-A-97/17566
- WO-A-98/31479
- GB-A- 2 326 209
- NL-A- 8 802 767
- US-A- 4 852 614

## Beschreibung

Die Erfindung betrifft eine Pipelinereparatur-Hilfsvorrichtung zur Abdichtung einer Schadstelle in einer Pipelinewandung einer kreisrohrförmigen Pipeline gegenüber einem in der Pipeline strömenden Fluid, bestehend aus wenigstens einem Abdichtmodul mit wenigstens zwei beabstandet zueinander angeordneten und über ein Basiselement miteinander verbundenen, radial expandierbaren Dichtmanschetten, welche im expandierten Zustand reibschlüssig und druckdicht an die Innenseite der Pipelinewandung angepreßt sind, wobei das Basiselement wenigstens ein Bypassleitungsrohr umfaßt, das in axialer Richtung der Pipeline von dem Fluid durchströmbar ist und dessen Umkreisradius kleiner als der Innenradius der Pipelinewandung und kleiner als der Außenradius der expandierten Dichtmanschetten ist, so daß zwischen den expandierten Dichtmanschetten ein druckdicht abgedichteter Arbeitsraum zwischen der Innenseite der Pipelinewandung und dem Außenumfang des Basiselements ausbildbar ist.

Pipelines sind über sehr große Entfernungen von mehreren 100 km bis 1000 km unter- oder überirdisch verlegt, um große Mengen an Energieträgern wie Erdgas oder Erdöl aus den Fördergebieten in diejenigen Regionen zu transportieren, in denen die weitere Verarbeitung und Verteilung bis zum Endverbraucher vorgenommen wird. Die Rohrleitungen erstrecken sich üblicherweise über lange Strecken von etwa 70 km zwischen zwei Pump-, Verdichter- oder Servicezugangs-Stationen und weisen einen Querschnitt auf, der mit einem Durchmesser von Nennweite 200 mm (8⁵/₈") bis Nennweite 1000 mm (40") zu gering ist, als daß es möglich wäre, bemannte Vorrichtungen in der Rohrleitung zu verfahren.

Es sind daher eine Vielzahl von sogenannten Molchen (*engl. pig*; *Mz. pigs)* bekannt, die in die Rohrleitung einschleusbar sind und die durch den in der Pipeline herrschenden Medienstrom bzw. den Förderdifferenzdruck bis zu einer Ausschleusungsstation transportiert werden. Hierzu reicht eine Druckdifferenz von Δp=0,5 bar (50 kPa) zwischen dem stromaufwärts gerichteten Ende der Vorrichtung und dem stromabwärts gerichteten Ende aus. Diese Vorrichtungen können mit Reinigungselementen an ihrem Außenumfang versehen sein, um Ablagerungen an den Innenseiten der Pipeline zu entfernen, oder mit Sensorelementen zur Inspektion und Feststellung von Defekten in der Pipelinewandung. Um eine ermittelte Schadstelle reparieren zu können, muß dann ein Pipeline-Abschnitt über seine gesamte Länge entspannt, entleert und nach der Ausbesserung wiederbefüllt werden, was mit erheblichem Zeit- und Kostenaufwand verbunden ist. Die notwendige Entleerung des betroffenen Pipelineabschnitts ist zudem mit Umweltrisiken und anderen Gefahren behaftet. Bei Erdgaspipelines ist die Entleerung beispielsweise nur durch Abfackeln möglich, womit eine Brandgefahr für die Umgebung hervorgerufen wird, oder durch Ableiten des Gases in die Atmosphäre, was wegen des hohen Methangehaltes von Erdgas hinsichtlich des Schutzes der atmosphärischen Ozonschicht problematisch ist.

Aus der Veröffentlichung "News from PSI" der Fa. PSI PLUGGING SPECIALISTS INTERNATIONAL A/S, Stavanger, Norwegen, ist eine Pipelinereparatur-Hilfsvorrichtung der eingangs genannten Art bekannt. Diese kann beispielsweise stromaufwärts vor der Schadstelle in den betroffenen Pipeline-Streckenabschnitt eingeschleust werden und dichtet die Pipeline über ihren gesamten Querschnitt ab. Durch Aufblasen der Dichtungsmanschetten mit Druckluft wird erreicht, daß diese mit ihrem Außenumfang gegen die Innenwandung der Pipeline pressen, wodurch eine Abdichtung erreicht wird. Zusammen mit einer weiteren, stromabwärts der Schadstelle plazierten Pipelinereparatur-Hilfsvorrichtung ist es möglich, die Schadstelle so weit zu isolieren, daß nur der dazwischen liegende Pipeline-Abschnitt von außen her zu entleeren ist, wonach die schadhafte Pipelinewandung ausgebessert oder ersetzt werden kann.

Nachteilig bleibt jedoch weiterhin, daß die Pipeline für die Dauer der Reparaturarbeiten nicht zur Förderung genutzt werden kann. Auch ist eine sichere Abdichtung nur bei einer Leitung möglich, die zwischen zwei Pumpstationen entspannt ist, da bei hohen Drücken eine unbeabsichtigte Verschiebung ausgelöst werden kann. Soweit insbesondere kompressible Medien wie Erdgas in der Pipeline transportiert werden, muß dann nach der Reparatur ein erhebliches Volumen in die Leitung gedrückt werden, um in dem reparierten Abschnitt den Betriebsdruck von 40 bis 100 bar (4 bis 10 MPa) wiederherzustellen.

Aus der DE 43 15 927 ist eine Vorrichtung bekannt, bei der ein offener, hohlzylindrischer Körper in die Längsrichtung der Rohrleitung eingebracht wird. Die Vorrichtung dient insbesondere zum Abdichten und Instandsetzen von geschädigten erdverlegten Rohrleitungen. In ähnlicher Weise wird bei der Vorrichtung gemäß WO 89/08217 ebenfalls ein festsetzbarer Molch verwendet, der mit Schlauchleitungen und ähnlichen Anschlüssen versehen ist, so daß nur ein Hindurchziehen durch die Rohrleitung möglich ist. Ein Verfahren mit Hilfe des strömenden Mediums ist nicht vorgesehen. Somit werden bei beiden Entgegenhaltungen die "Molche" nicht vom Fluidstrom transportiert. Die Fahrstrecke ist durch die Länge der Versorgungsleitungen begrenzt. Die Molche müssen aus der Pipeline nach Beendigung der Arbeiten herausgezogen werden und sind daher nur in drucklosen Leitungen einsetzbar.

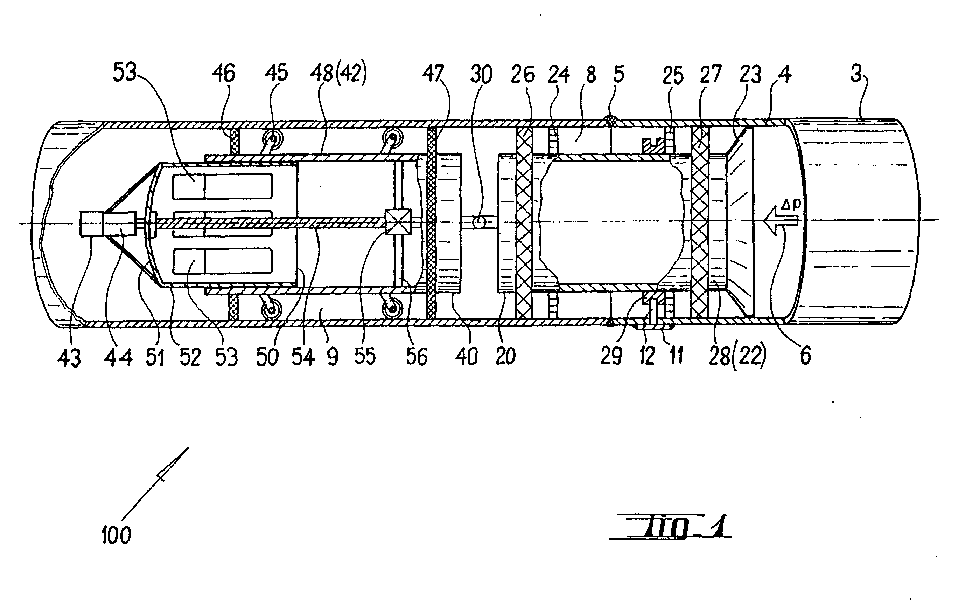

Aus der GB 2 326 209 A ist eine Pipelineinspektionsvorrichtung bekannt, die mit Meßaufnehmern versehen ist, mit denen die Pipelinewandung auf Schadstellen hin untersucht werden kann. Die Pipelineinspektionsvorrichtung ist vom Fluid in der Pipeline verschiebbar und umfaßt ein Bypassleitungsrohr, das in axialer Richtung der Pipeline von dem Fluid durchströmbar ist und dessen Umkreisradius kleiner als der Innenradius der Pipelinewandung ist. Das Bypassleitungsrohr ist mit Mitteln zur Regulierung des Strömungswiderstandes versehen, so daß eine gewisse Geschwindigkeitssteuerung möglich ist. Die Treibmanschetten (drive cups 16, 18, Fig. 1) sind nur für den Transport "sealingly engaged". Sie erlauben es nicht, eine bestimmte Sektion der Rohr-Innenwand gegenüber dem deutlich höheren Pipelinedruck drucklos zu machen, um Reparaturen an den gefundenen Schadstellen vornehmen zu können.

Es stellt sich daher die Aufgabe, eine Pipelinereparatur-Hilfsvorrichtung anzugeben, mit der eine Reparatur einer Schadstelle in einer Pipelinewandung oder der Einbau einer Abzweigleitung in eine Pipelinewandung unter Aufrechterhaltung des Förderbetriebs möglich ist und zwar ohne Verluste an Erdgas, Erdöl oder anderen transportierten Medien, die heute üblicherweise beim Entleeren des Reparaturabschnitts entstehen.

Diese Aufgabe wird bei einer Pipelinereparatur-Hilfsvorrichtung der eingangs genannten Art durch die kennzeichnenden Merkmale des Anspruchs 1 gelöst.

Wesentlicher Unterschied des Standes der Technik gemäß den letztgenannten Schriften zum Gegenstand der Patentanmeldung ist, daß der Reparaturmolch an eine bestimmte Stelle der Pipeline gefahren werden kann, sich dort festsetzt und die Möglichkeiten bietet, bei aufrechterhaltenem Hochdruck-Leitungsbetrieb sowohl eine Schadstelle in der Pipelinewandung zu reparieren als auch die Pipelinewandung zu durchbohren, z. B. zum Anschluß einer Abzweigleitung oder eine defekte Abzweigarmatur auszuwechseln.

Dabei besteht naturgemäß keine draht- oder leitungsgebundene Verbindung nach außen, sondern nur eine drahtlose zur Kommunikation zwischen dem Molch und dem Personal außerhalb der Pipeline.

Es ist ein wesentlicher Vorteil der erfindungsgemäßen Pipelinereparatur-Hilfsvorrichtung, daß hiermit eine Öffnung in der Pipelinewandung durch einen Arbeitsraum von dem weiterhin durch die Leitung strömenden Fluid isoliert werden kann. Die Pipelinewandung hat also in dem zwischen den Dichtmanschetten (engl. packer) liegenden Bereich keine Belastung durch Innendruck. Auch kann der Arbeitsraum, beispielsweise durch Befüllung mit Stickstoff, inertisiert werden, so daß auch an im Förderbetrieb befindlichen Erdgas-Pipelines die Sicherheit bei Feuerarbeiten an der Pipelinewandung gegeben ist.

Die Pipelinewandung kann zum Zwecke einer Reparatur bis zur Innenseite durchgeschliffen und neu geschweißt werden. Ebenso kann dort eine Anbohrung zur Schaffung eines Abzweiges von der Leitung erfolgen. Der Transportbetrieb kann dabei aufrechterhalten werden; Umgehungen der Reparaturstelle über andere Rohrleitungsnetze können entfallen.
Durch das wenigstens eine Bypassleitungsrohr kann ein großer Teil des üblicherweise in der Pipeline geförderten Volumenstroms durchgeleitet werden. Der Förderdruck braucht daher bei der erfindungsgemäßen Pipelinereparatur-Hilfsvorrichtung nicht abgesenkt werden. Die Klemmkraft des Abdichtmoduls an der Pipelinewandung wird stets größer ausgelegt als der Strömungswiderstand, der auf der Querschnittsverengung beruht, die von einer in der durchströmten Pipeline befindlichen Pipelinereparatur-Hilfsvorrichtung ausgeht.

Da nach dem Gesetz von HAGEN-POISEUILLE der Volumenstrom in einem Kreisrohr bei gegebener Druckdifferenz mit der vierten Potenz des Rohrradius ansteigt, ist es von Vorteil, wenn die Querschnittsfläche des Bypassleitungsrohrs 60% bis 90% der Querschnittsfläche der Pipeline beträgt. Bei diesem Wert sind die während des Reparaturbetriebs mit einer erfindungsgemäßen Pipelinereparatur-Hilfsvorrichtung auftretenden Durchsatzverluste so gering, daß während der Reparatur ein wirtschaftlicher Transportbetrieb in der Pipeline gegeben ist. Soweit die Pipelinereparatur-Hilfsvorrichtung nur eine geringe Querschnittsverengung hervorruft und damit ein kleines Strömungshindernis bei einer bestimmten Strömungsgeschwindigkeit darstellt, kann sogar der Förderbetrieb ohne Einschränkungen aufrechterhalten werden. Dem Leitungsbetreiber kommt es in erster Linie darauf an, daß sich das nachgeschaltete Leitungsstück bzw. -netz nicht gänzlich entleert.

Eine Kreisringform des isolierbaren Arbeitsraums, der ein kreisrundes Bypassleitungsrohr umgibt, stellt eine Ausführungsform dar, die u. a. hinsichtlich der Druckfestigkeit vorteilhaft ist.

Andere Querschnittsformen seien aber nicht ausgeschlossen. So kann das Basiselement auch ein Bündel von Bypassrohrleitungen umfassen oder einen polygonalen Querschnitt aufweisen. Wesentlich ist, daß zwischen dem Umfang des Basiselements und der Innenwandung der Pipeline ein gegenüber dem Förderstrom abzuschottender Arbeitsraum zu bilden ist, der sich über den gesamten Umfang der Pipelinereparatur-Hilfsvorrichtung erstrecken kann oder auch nur über ein Segment davon.

Um eine unbeabsichtigte axiale und/oder radiale Verschiebung der Pipelinereparatur-Hilfsvorrichtung während der Reparatur unterbinden zu können, wird vorgeschlagen, daß die Pipelinereparatur-Hilfsvorrichtung mit wenigstens einem innerhalb des Arbeitsraums angeordneten Verriegelungselement zur formschlüssigen Festlegung mit der Pipelinewandung versehen ist. Zum Verriegeln kann durch eine Bohrung ein Bolzen von der Außenseite der Pipeline her eingebracht werden, der in einer kompatiblen, im Arbeitsraum angeordneten Verriegelungsaufnahmeeinrichtung festlegbar ist.
Mit dem Verriegelungselement ist sichergestellt, daß die Pipelinereparatur-Hilfsvorrichtung während der Reparatur axial festgelegt ist und auch bei Überwindung der Klemmkraft der Dichtmanschetten infolge hohen Staudrucks ein Austritt von Fluiden an der Reparaturstelle verhindert ist.

Nach der Bemessung des Pipelinedurchmessers kann das Transportmodul mit dem Arbeitsmodul einstückig, das heißt integriert sein, so daß nur ein Molchkörper, bestehend aus Transport- und Arbeitseinheit, vorhanden ist. Andererseits kann die Pipelinereparatur-Hilfsvorrichtung auch ein mit dem Abdichtmodul gelenkig verbundenes Transportmodul mit einem Bypassleitungsrohr aufweisen. In dem Transportmodul können Mittel zum Bewegen der Pipelinereparatur-Hilfsvorrichtung innerhalb der Pipeline integriert sein. Durch die Unterteilung der Pipelinereparatur-Hilfsvorrichtung in gelenkig verbundene Module kann ein kleinerer Kurvenradius durchfahren werden als bei einer starren Verbindung mit größeren Ausmaßen. Es hat sich jedoch gezeigt, daß durch Miniaturisieren der Einbauelemente Vorrichtungen an verschiedene Pipelinedurchmesser angepaßt werden können.

Das Transportmodul und/oder das Abdichtmodul bzw. die einstückige Vorrichtung sollten wenigstens zwei kreisförmige Treib-Führungs-Manschetten aufweisen, so daß eine Verschiebung der Pipelinereparatur-Hilfsvorrichtung innerhalb der Pipeline über einen ein Druckgefälle aufweisenden Streckenabschnitt der Pipeline ermöglicht ist. Mit den Treib-Führungs-Manschetten wird die axiale Ausrichtung der Pipelinereparatur-Hilfsvorrichtung auf dem Marsch zur Schadstelle verbessert und ein Verkanten verhindert. Auch können die Dichtmanschetten dann soweit im Durchmesser verringert sein, daß sie vor dem Expandieren auch in Kurvendurchfahrten nicht in Berührung mit der Pipelinewandung kommen. Hierdurch wird vermieden, daß die Dichtmanschetten beschädigt oder verschmutzt werden, bevor die Pipelinereparatur-Hilfsvorrichtung die Reparaturstelle erreicht.

Um eine gute Abdichtung zur Pipelinewandung hin zu erreichen und damit den Vorschub der Pipelinereparatur-Hilfsvorrichtung entlang eines in der Pipeline herrschenden Druckgefälles zu ermöglichen, weisen die Treib-Führungs-Manschetten einen Durchmesser auf, der dem Innendurchmesser der Pipeline zuzüglich eines Übermaßes von 5% bis 10% entspricht.

Die Pipelinereparatur-Hilfsvorrichtung kann für den Marsch zur Arbeitsstelle auch mit Laufrollen versehen sein. Hierzu weisen das Transportmodul und/oder das Abdichtmodul wenigstens zwei axial beabstandete, am Umfang des Basiselements angeordnete Reihen mit je wenigstens zwei Laufrollen auf. Vorzugsweise sind pro Reihe drei Laufrollen gleichmäßig über den Umfang verteilt, so daß eine zentrische Abstützung der Pipelinereparatur-Hilfsvorrichtung innerhalb der Pipeline auch in Kurven- und Gefälleabschnitten sichergestellt ist.

Um eine Schadstelle in der Pipelinewandung gezielt anfahren zu können, ist eine Ausführungsform von Vorteil, bei der in dem Bypassleitungsrohr des Abdichtmoduls und/oder in dem Bypassleitungsrohr des Transportmoduls ein Fensterkolben angeordnet ist, der aus einer die Querschnittsfläche des Bypassleitungsrohrs abdeckenden Kolbenplatte und einem damit verbundenen Zylinderrohrelement gebildet ist.
Das Zylinderrohrelement ist mit wenigstens einer Fensterausnehmung versehen, wobei der Fensterkolben soweit axial aus dem Bypassleitungsrohr herausschiebbar ist, daß die wenigstens eine Fensterausnehmung wenigstens teilweise außerhalb des Bypassleitungsrohrs liegt und ein Ausströmen von Fluiden aus dem Bypassleitungsrohr ermöglicht ist. Somit kann der Fluid-Volumenstrom und damit der Strömungswiderstand der Pipelinereparatur-Hilfsvorrichtung durch Verstellen des Fensterkolbens variiert werden. Liegen die Fensterausnehmungen innerhalb des Bypassleitungsrohrs, wird die in einer Pipeline befindliche Reparaturvorrichtung über den gesamten Querschnitt angeströmt. Wenn dabei in dem Abschnitt der Pipeline ein Druckgefälle besteht, wird die Pipelinereparatur-Hilfsvorrichtung aufgrund des Staudrucks durch die Pipeline hindurch gedrückt.
Vor dem Erreichen der anzufahrenden Schadstelle kann über eine Fernbetätigung eine Verstellung des Fensterkolbens ausgelöst werden, wodurch die Fensterausnehmung wenigstens teilweise aus dem Bypassleitungsrohr heraustritt und durchströmbar ist. Damit sinkt der Strömungswiderstand so weit, daß die Reibung, die beispielsweise zwischen den Treib-Führungs-Manschetten und der Pipelinewandung besteht, nicht mehr überwunden wird und die Pipelinereparatur-Hilfsvorrichtung an der vorbestimmten Stelle im Streckenabschnitt der Pipeline stoppt.

Das Prinzip der Wegsteuerung über eine Regulierung des Strömungswiderstands kann auch in einer weiteren Ausführungsform umgesetzt sein, bei der das Bypassleitungsrohr des Abdichtmoduls in wenigstens einem endseitigen Bereich und/oder das Bypassleitungsrohr des Transportmoduls folgende Einzelheiten aufweist:
- wenigstens eine Fensterausnehmung und
- wenigstens einen sich über die Querschnittsfläche des Bypassleitungsrohrs erstreckenden Kolben, der entlang einer axialen Erstreckung der wenigstens einen Fensterausnehmung verschiebbar ist.

Der Kolben ist hierbei zunächst stromaufwärts angeordnet. Zum Abbremsen kann der Kolben dann soweit verfahren werden, daß ein Volumenstrom durch die Fensterausnehmung hindurch und aus dem Bypassleitungsrohr heraus ermöglicht ist.

Ebenso kann zur Regulierung des Strömungswiderstands in dem Bypassleitungsrohr des Abdichtmoduls und/oder in dem Bypassleitungsrohr des Transportmoduls wenigstens ein Drosselklappenelement angeordnet sein, das um eine Achse rotierbar ist, die in einem Winkel von 45° bis 90° zur Mittelachse des Bypassleitungsrohrs gelagert ist.

Das Drosselklappenelement kann halbkugelförmig sein oder aus mehreren Segmenten einer Kugel bestehen, die überlappend rotierbar sind, so daß im Schließzustand der Querschnitt des Bypassleitungsrohr vollständig abgedeckt ist. Im Öffnungszustand sind die konvexen Außenseiten der Kugelsegmente zur Pipelinewandung hin ausgerichtet, wodurch die angeströmte Fläche minimiert ist.

Das Drosselklappenelement kann auch scheibenförmig sein. Während das in der Schließstellung quer zur Achse des Bypassleitungsrohrs angestellte Drosselklappenelement eine vollständige Querschnittsabdeckung bewirkt, wird in einer um 90° hierzu versetzten Öffnungsstellung nur die Kante des Drossselklappenelements angeströmt und damit ein geringer Strömungswiderstand erreicht.

Um den Strömungswiderstand der Pipelinereparatur-Hilfsvorrichtung während der Arbeiten am entspannten Arbeitsraum zu reduzieren und damit die Sicherheit gegen unbeabsichtigtes Verschieben der Vorrichtung zu erhöhen, wird vorgeschlagen, daß das Abdichtmodul an seinem stromaufwärts gerichteten Ende einen Reduziertrichter aufweist, dessen Außendurchmesser das 0,9 ... 1,0fache des Innendurchmessers der Pipeline beträgt und dessen Innendurchmesser dem Innendurchmesser des Bypassleitungsrohrs entspricht. Die Trichterwand ist vorzugsweise in einem Winkel von kleiner als 45° zur Pipelineachse geneigt.

Vorteilhaft ist weiterhin eine Ausführungsform, bei der das Abdichtmodul wenigstens einen motorisch ein- und ausfaltbaren Trichterschirm aufweist mit wenigstens einem Stülpring aus einem elastomeren Werkstoff. Mit dem Trichterschirm kann an Stelle von oder zusätzlich zu einer Dichtmanschette die Abdichtung des Arbeitsraums bewirkt werden. Der Trichterschirm ist vorzugsweise über ein Kniehebelgestänge ein- und ausfaltbar. Bei Erreichen der Reparaturstelle wird der Trichterschirm ausgefahren; durch den hohen Druck des gegen die Pipelinereparatur-Hilfsvorrichtung strömenden Fluids wird der wenigstens eine Stülpring in den Bereich zwischen der Außenseite des Bypassleitungsrohrs und der Innenwandung der Pipeline gedrückt, wo er axial an die Dichtmanschette oder einen separaten Stützring angepreßt wird. Der Stülpring des Trichterschirms weist vorzugsweise einen L- oder C-förmigen Querschnitt auf, wobei ein stromaufwärts gerichteter Schenkel parallel zur Pipelinewandung ausgerichtet ist. Durch den in der Pipeline herrschenden Innendruck wird der Stülpring so auch in radialer Richtung an die Pipelinewandung gepreßt.

Die Erfindung und deren Verwendung bei der Reparatur einer Pipeline und anderen Arbeiten unter Aufrechterhaltung des Förderbetriebs wird nachfolgend anhand eines Beispiels und mit Bezug auf die Zeichnung näher erläutert. Die Figuren zeigen jeweils in axialen Schnittansichten:
- Fig. 1: eine in eine Pipeline eingeschobene Pipelinereparatur-Hilfsvorrichtung mit einem Transport- und einem Abdichtmodul;
- Fig. 2: eine weitere Ausführungsform eines Transportmoduls;
- Fig. 3: eine weitere Ausführungsform eines Abdichtmoduls und
- Fig. 4: eine Ausführungsform einer Dichtmanschette im Detail.

In Figur 1 ist eine Pipeline 3 dargestellt, wobei Teile der Pipelinewandung 4 aufgeschnitten sind, so daß der Blick auf eine in die Pipeline 3 eingeschleuste Pipelinereparatur-Hilfsvorrichtung 100 frei ist. Die Pipelinewandung 4 weist im Bereich einer Schweißnaht eine zu reparierende Schadstelle 5 auf.

Die Pipelinereparatur-Hilfsvorrichtung 100 ist aus einem Zug von Modulen gebildet, wobei in dem dargestellten Beispiel ein Abdichtmodul 20 und ein Transportmodul 40 über ein Kardangelenk 30 miteinander verbunden sind. Grundsätzlich können das Transportmodul 40 und das Abdichtmodul 20 einstückig auf einem gemeinsamen Basiselement 22 aufgebaut sein. Die in Figur 1 abgebildete Unterteilung in einzelne Module 20, 40 ermöglicht jedoch das Durchfahren enger Kurvenradien in der Pipeline 3; zudem ist bei Defekten an Teilen der Pipelinereparatur-Hilfsvorrichtung 100 ein einfacherer Austausch von Modulen möglich.

Sowohl das Transportmodul 40 als auch das Abdichtmodul 20 sind auf kreisrunden Bypassleitungsrohren 28,48 aufgebaut, die zugleich das Basiselement 22,42 bilden. Der Außendurchmesser der Bypassleitungsrohre 28,48 ist kleiner als der Innendurchmesser der Pipeline 3, so daß jeweils zwischen der Außenwandung der Bypassleitungsrohre 28,48 und der Innenwandung der Pipeline 3 ein ungedichteter Kreisringraum 9 bzw. ein isolierbarer Arbeitsraum 8 gebildet ist.

Das Transportmodul 40 enthält Elemente zum Steuern der gesamten Pipelinereparatur-Hilfsvorrichtung 100 innerhalb der Pipeline 3. Hierzu weist das Transportmodul 40 eine Steuerungsund Empfangs- und/oder Sendeeinrichtung 44 auf, die über bekannte Kommunikationseinrichtungen sowohl eine Ortung der Pipelinereparatur-Hilfsvorrichtung 100 von der Außenseite der unterirdisch verlegten Pipeline 3 her als auch eine von der Außenseite erfolgende Fernbetätigung von Verstellelementen an der Pipelinereparatur-Hilfsvorrichtung 100 ermöglicht. Beispielsweise kann die Übermittlung von Steuerkommandos an die Pipelinereparatur-Hilfsvorrichtung über schwache Gammastrahler und entsprechende Strahlenempfänger durch die Pipelinewandung hindurch von der Außenseite der Pipeline erfolgen.

In der Pipeline 3 besteht ein Druckgefälle Δp, das mit einem Pfeil 6 angedeutet ist. Das Fluid strömt zunächst durch die geöffneten Bypassleitungen 28, 48 und durch die offenen Fensterausnehmungen 53 des Fensterkolbens 50 hindurch, so daß nur die Kreisringfläche zwischen der Außenseite der Bypassleitungsrohre 28 und der Innenwandung der Pipeline 3 angeströmt wird, woraus bei gegebenem Druck Δp eine auf die Pipelinereparatur-Hilfsvorrichtung 100 wirkende, stromabwärts gerichtete Kraft entsteht. Die zur Überwindung der Haftreibung zwischen der Pipelinewandung 4 und den anliegenden Treib-Führungs-Manschetten 26,27; 46,47 erforderliche Kraft ist bei einer gegebenen Betriebs-Druckdifferenz Δp im Pipelineabschnitt größer als die bei geöffneten Bypassleitungsrohren 28;48 wirkende Schubkraft, so daß sich die Pipelinereparatur-Hilfsvorrichtung 100 zunächst nicht weiterbewegt.

Über mehrere Stützspeichen 56 ist ein Antriebselement 55 zentrisch innerhalb des Bypassleitungsrohrs 48 angeordnet, das eine Schneckenwelle 54 antreibt. Die Schneckenwelle 54 greift in eine nicht näher bezeichnete Spindelmutter im Zentrum der Kolbenplatte 51 ein. Durch Rotation wird eine translatorische Bewegung des Fensterkolbens 50 bewirkt.

Um eine Bewegung der Pipelinereparatur-Hilfsvorrichtung 100 innerhalb der Pipeline 3 einzuleiten, wird der Fensterkolben soweit stromaufwärts verfahren, daß die Fensterausnehmungen 53 im Zylinderrohrelement 52 des Fensterkolbens 50 wenigstens teilweise innerhalb der Wandung des Bypassleitungsrohrs 48 liegen und durch diese abgedeckt sind. Der Durchfluß durch die Pipelinereparatur-Hilfsvorrichtung 100 hindurch wird reduziert und der Staudruck steigt, so daß auch die vortreibende Kraft so weit wächst, bis die Haftreibung zwischen der Pipelinewandung 4 und den Treib-Führungs-Manschetten 26,27;46,47 überwunden werden kann. Durch das Druckgefälle im Pipelineabschnitt wird die Pipelinereparatur-Hilfsvorrichtung 100 jetzt so weit durch die Pipeline 3 geschoben, bis der Fensterkolben kurz vor Erreichen der anzufahrenden Schadstelle 5 wieder ausgefahren wird, wodurch der Strömungswiderstand und damit der Staudruck sinkt. Es wird ein Gleichgewicht zwischen der vortreibenden Kraft und der Reibungskraft erreicht, so daß die Pipelinereparatur-Hilfsvorrichtung 100 angehalten wird. Zur Feinjustierung der Endlage der Pipelinereparatur-Hilfsvorrichtung 100 ist das Transportmodul 40 mit angetriebenen Laufrollen 45 versehen. Die Antriebe werden durch ein Energiespeicherelement 43 gespeist.

Die Verstellung des Fensterkolbens 50 kann über die mit Elektromotoren angetriebene Schneckenwelle 54 bewirkt werden. Möglich ist aber auch, am vorgesehenen Stopp-Punkt eine Arretierung frei zu geben, durch die der Fensterkolben 50 infolge des Fluiddrucks automatisch vorgeschoben wird und die Fensterausnehmungen 53 frei gibt. Nach Abschluß der Arbeiten wird eine vorgespannte Schrauben- oder Druckfeder ausgelöst, die den Fensterkolben 50 in die Schließstellung zurückführt und dort hält.

An der Schadstelle 5 wird die Expansion der Dichtmanschetten 24, 25 ausgelöst, beispielsweise durch Einleiten von Druckluft aus einem nicht dargestellten Druckluftspeicher in Hohlkammern in den Dichtmanschetten 24, 25. Die Dichtmanschetten 24, 25 pressen dann am gesamten Umfang gegen die Innenwandung der Pipeline 3 und bewirken eine Abdichtung des Arbeitsraums 8 gegenüber dem in der Pipeline 3 strömenden Fluid.

Die Schadstelle 5 ist so von dem in die Bypassleitungsrohre 28, 48 umgeleiteten Fluidstrom getrennt. Es ist möglich, die Pipelinewandung 4 vollständig zu durchtrennen und Teile der Wandung zu erneuern.

Das Losbrechen des Abdichtmoduls 20 während der Reparaturarbeiten an der Pipelinewandung 4 muß auf jeden Fall verhindert sein. Daher weist das Abdichtmodul 20 eine in dem Arbeitsraum 8 angeordnete Verriegelungsaufnahmeeinrichtung 29 auf, die aus einem um das Bypassleitungsrohr 28 herumführenden Ring mit U-Profilquerschnitt besteht. Durch eine auf die Pipeline 3 aufgeschweißte Muffe 11 mit Kugelhahn mit vollem runden Durchgang wird die Pipelinewandung 4 durchbohrt und der dahinter liegende Arbeitsraum 8 entspannt. Durch die Muffe 11 und die Bohrung hindurch wird weiterhin ein Verriegelungselement 12 eingeführt, das in die U-förmige Nut der Verriegelungsaufnahmeeinrichtung 29 eingreift, so daß die Pipelinereparatur-Hilfsvorrichtung 100 durch das Verriegelungselement 12 formschlüssig festgelegt und gesichert ist. Zur Reduzierung des Strömungswiderstands ist zusätzlich am stromaufwärts gerichteten Ende ein Reduziertrichter 23 angeordnet.

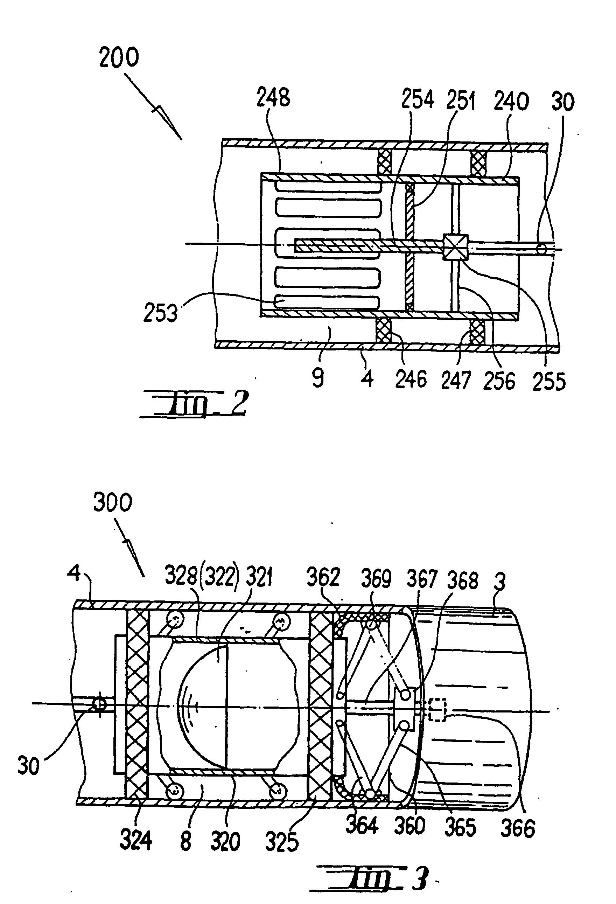

In Figur 2 ist eine weitere Ausführungsform einer Pipelinereparatur-Hilfsvorrichtung 200 dargestellt, bei der das Transportmodul 240 ein Bypassleitungsrohr 248 aufweist, das in einem endseitigen Bereich Fensterausnehmungen 253 aufweist. Ein Kolben 251 ist in der Schließstellung stromaufwärts vor den Fensterausnehmungen 253 angeordnet. Durch Verschieben des Kolbens 251 mit einer Schneckenwelle 254, die über ein Antriebselement 255 angetrieben ist, wird wiederum ein Fluidstrom aus dem Bypassleitungsrohr 248 durch die Fensterausnehmungen 253 hindurch in die Pipeline 3 ermöglicht, so daß der Staudruck hinter der Pipelinereparatur-Hilfsvorrichtung 200 absinkt.

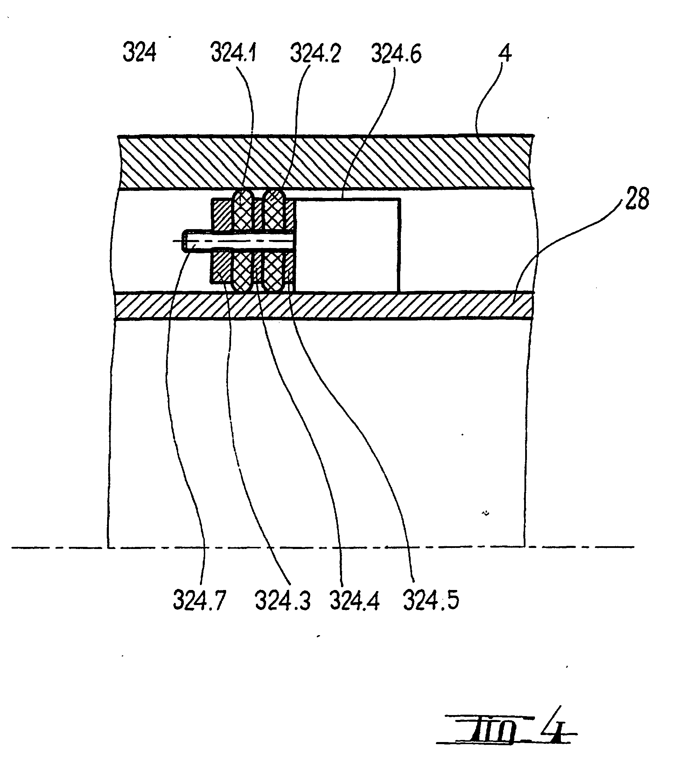

Figur 3 zeigt eine Ausführungsform einer Pipelinereparatur-Hilfsvorrichtung 300, bei der die Regulierung des Staudrucks durch ein im Bypassleitungsrohr 328 angeordnetes Drosselklappenelement 321 bewirkt wird. Die Drehachse des Drosselklappenelements 321 ist in einem Winkel α = 90° zur Achse des Bypassleitungsrohrs 328 angestellt. Durch Drehung des Drosselklappenelements 321 wird die angeströmte Fläche variiert und damit die auf die Pipelinereparatur-Hilfsvorrichtung 300 wirkende Vorschubkraft geregelt. Auf dem Marsch wird die Pipelinereparatur-Hilfsvorrichtung 300 durch die Treib-Führungs-Manschetten geführt. Bei Erreichen der Schadstelle wird der Trichterschirm 360 ausgefaltet, der durch den hohen Fluiddruck mit seinem Stülpring 362 axial an die Dichtmanschette 325 und zugleich radial an die Pipelinewandung 4 angepreßt wird. Zusätzlich werden die Dichtmanschetten 324, 325 expandiert und an die Pipelinewandung 4 angepreßt.

Nach Abschluß der Arbeiten werden die Dichtmanschetten 324,325 gelöst, wodurch in dem zuvor entspannten Arbeitsraum 8 ein Druckausgleich bewirkt wird. Hierdurch wird zugleich der Anpreßdruck an dem Stülpring 362 aufgehoben, so daß der Trichterschirm 360, ähnlich wie ein Regenschirm, wieder eingefaltet werden kann. Durch eine mit einem Antriebselement 366 angetriebene Schneckenwelle 367 wird eine Spindelmutter 368 verfahren. Die mit der Spindelmutter 368 verbundenen Kniehebel 365 werden von den ortsfest an der Pipelinereparatur-Hilfsvorrichtung 300 angebrachten Kniehebeln 364 weggeschwenkt, so daß das Gelenk 369 und das hiermit verbundene Ende des Stülprings 362 radial nach innen bewegt werden.

In Figur 4 ist eine ringförmige Dichtmanschette 324 ausschnittsweise im Detail dargestellt. Diese besteht aus einer alternierenden Folge von Druckringen 324.4, 324.5 und Gummiringen 324.1, 324.2. Das so gebildete Paket liegt zwischen einem Mutternring 324.3 und einer Verstelleinheit 324.6, die beispielsweise einen Motor und ein Getriebe umfaßt. Der Abtrieb der Verstelleinheit 324.6 ist durch eine Schneckenwelle 324.7 gebildet. Durch Rotation der Schneckenwelle 324.7 wird der Mutternring 324.3 gegen die Verstelleinheit 324.6 gezogen. In dem dazwischen liegenden Paket werden die Gummiringe 324.1, 324.2 axial gequetscht, so daß sie in radialer Richtung verlängert werden und eine Dichtung zwischen Bypassleitungsrohr 328 und Pipelinewandung 4 bewirken. Es sind vorzugsweise mehrere Verstelleinheiten über den Umfang der Dichtmanschette 324 verteilt, um eine gleichmäßige Verstellung und Abdichtung zu erreichen.

## Patentansprüche

1. Pipelinereparatur-Hilfsvorrichtung (100; 200; 300) zur Abdichtung einer Schadstelle (5) in einer Pipelinewandung (4) einer kreisrohrförmigen Pipeline gegenüber einem in der Pipeline (3) strömenden Fluid,
mit einem Basiselement (22; 322), das wenigstens ein Bypassleitungsrohr (28; 328) umfaßt, das in axialer Richtung der Pipeline (3) von dem Fluid durchströmbar ist und dessen Umkreisradius (22; 322) kleiner als der Innenradius der Pipelinewandung (4) ist,
wobei das Bypassleitungsrohr (28; 328) mit Mitteln zur Regulierung des Strömungswiderstandes der Pipelinereparatur-Hilfsvorrichtung versehen ist, so daß die Pipelinereparatur-Hilfsvorrichtung von dem strömenden Fluid in der Pipeline verschiebbar ist und eine Wegsteuerung möglich ist, mit der bei Erreichen der Schadstelle (5) der Strömungswiderstand soweit absenkbar ist, daß die Pipelinereparatur-Hilfsvorrichtung an einer vorbestimmten Stelle stoppt, **dadurch gekennzeichnet, daß** das Basiselement als Abdichtmodul (20, 320) mit wenigstens zwei beabstandet zueinander angeordneten und über das Basiselement (22) miteinander verbundenen, radial expandierbaren Dichtmanschetten (24, 25; 324, 325) ausgebildet ist, welche im expandierten Zustand reibschlüssig und druckdicht an die Innenseite der Pipelinewandung (4) angepreßt sind,
wobei der Umkreisradius (22; 322) des Bypassleitungsrohrs kleiner als der Außenradius der expandierten Dichtmanschetten (24, 25; 324, 325) ist, und wobei der Druck im dadurch gebildeten Arbeitsraum (8) deutlich geringer oder deutlich höher sein kann als der Druck vor und hinter den Dichtmanschetten.

2. Pipelinereparatur-Hilfsvorrichtung (100) nach Anspruch 1, **dadurch gekennzeichnet, daß** die Pipelinereparatur-Hilfsvorrichtung (100) mit einer Verriegelungsaufnahmeeinrichtung in Form eines U-förmigen Rings (29), eines Ringsegments oder einer Bohrung zur formschlüssigen Festlegung mittels Bolzen (12) in oder durch die Pipelinewandung (4) versehen ist.

3. Pipelinereparatur-Hilfsvorrichtung (100; 200; 300) nach einem der Ansprüche 1 bis 2, **dadurch gekennzeichnet, daß** die Pipelinereparatur-Hilfsvorrichtung wenigstens aus einem Abdichtmodul (20, 320) und einem mit diesem gelenkig verbundenen oder einstückig mit diesem hergestellten Transportmodul (40; 240; 340) mit einem Bypassleitungsrohr (48; 248; 348) besteht.

4. Pipelinereparatur-Hilfsvorrichtung (100; 200; 300) nach einem der Ansprüche 1 bis 3, **dadurch gekennzeichnet, daß** das Transportmodul (40; 240; 340) und/oder das Abdichtmodul (20; 320) wenigstens zwei kreisförmige, das Basiselement umschließende Treib-Führungs-Manschetten (26,27,46,47; 246,247) aufweist.

5. Pipelinereparatur-Hilfsvorrichtung (100; 200; 300) nach Anspruch 4, **dadurch gekennzeichnet, daß** der Durchmesser der Treib-Führungs-Manschetten (26,27; 46,47; 246,247) dem Innendurchmesser der Pipeline (3) zuzüglich eines Übermaßes von 5% bis 10% entspricht.

6. Pipelinereparatur-Hilfsvorrichtung (300) nach einem der Ansprüche 1 bis 5, **dadurch gekennzeichnet, daß** das Transportmodul (340) und/oder das Abdichtmodul (320) wenigstens zwei axial beabstandete, am Umfang des Basiselements (322) angeordnete Reihen mit je wenigstens zwei Laufrollen aufweist.

7. Pipelinereparatur-Hilfsvorrichtung (100) nach einem der Ansprüche 1 bis 6, **dadurch gekennzeichnet, daß** zur Feinjustierung der Endlage der Pipelinereparatur-Hilfsvorrichtung (100) motorisch angetriebene Laufrollen (45) montiert sind.

8. Pipelinereparatur-Hilfsvorrichtung (100) nach einem der Ansprüche 1 bis 7, **dadurch gekennzeichnet, daß** in dem Bypassleitungsrohr (28) des Abdichtmoduls (20) und/oder in dem Bypassleitungsrohr (48) des Transportmoduls (40) ein Fensterkolben (50) angeordnet ist, der aus einer die Querschnittsfläche des Bypassleitungsrohrs (28; 48) abdeckenden Kolbenplatte (51) und einem damit verbundenen Zylinderrohrelement (52) gebildet ist, welches mit wenigstens einer Fensterausnehmung (53) versehen ist, wobei der Fensterkolben (50) soweit axial aus dem Bypassleitungsrohr (28;48) herausschiebbar ist, daß die wenigstens eine Fensterausnehmung (53) wenigstens teilweise außerhalb des Bypassleitungsrohrs (28;48) liegt und ein Ausströmen von Fluiden aus dem Bypassleitungsrohr (28) ermöglicht ist.

9. Pipelinereparatur-Hilfsvorrichtung (200) nach einem der Ansprüche 1 bis 7, **dadurch gekennzeichnet, daß** das Bypassleitungsrohr des Abdichtmoduls und/oder das Bypassleitungsrohr (248) des Transportmoduls (240) folgende Einzelheiten aufweist: a) wenigstens eine Fensterausnehmung (253) und b) wenigstens einen die Querschnittsfläche des Bypassleitungsrohrs (248) abdeckenden Kolben (251), der entlang der axialen Erstreckung der wenigstens einen Fensterausnehmung (263) verschiebbar ist.

10. Pipelinereparatur-Hilfsvorrichtung (300) nach einem der Ansprüche 1 bis 7, **dadurch gekennzeichnet, daß** in dem Bypassleitungsrohr (328) des Abdichtmoduls (320) und/oder in dem Bypassleitungsrohr (348) des Transportmoduls (340) wenigstens ein Drosselklappenelement (321) angeordnet ist, das um eine Achse rotierbar ist, die in einem Winkel von 45° bis 90° zur Mittelachse des Bypassleitungsrohrs (328) gelagert ist.

11. Pipelinereparatur-Hilfsvorrichtung (300) nach Anspruch 10, **dadurch gekennzeichnet, daß** das Drosselklappenelement (321) scheibenförmig ist.

12. Pipelinereparatur-Hilfsvorrichtung (300) nach Anspruch 10, **dadurch gekennzeichnet, daß** das Drosselklappenelement (321) halbkugelförmig ist.

13. Pipelinereparatur-Hilfsvorrichtung (300) nach Anspruch 10, **dadurch gekennzeichnet, daß** das Drosselklappenelements (312) aus wenigstens zwei Segmenten einer Kugel gebildet ist, mit denen in einem Schließzustand des Drosselklappenelements (312) der Querschnitts des Bypassleitungsrohr (328) abgedeckt ist und deren konvexe Außenseiten in einem Öffnungszustand zur Pipelinewandung (4) hin ausgerichtet sind.

14. Pipelinereparatur-Hilfsvorrichtung (100) nach einem der Ansprüche 1 bis 13, **dadurch gekennzeichnet, daß** das Abdichtmodul (20) an seinem stromaufwärts gerichteten Ende einen Reduziertrichter (23) aufweist, dessen Außendurchmesser das 0,9 ... 1,0fache des Innendurchmessers der Pipeline beträgt und dessen Innendurchmesser dem Innendurchmesser des Bypassleitungsrohrs (28) entspricht.

15. Pipelinereparatur-Hilfsvorrichtung (300) nach Anspruch 14, **dadurch gekennzeichnet, daß** das Abdichtmodul (320) wenigstens einen motorisch ein- und ausfaltbaren Trichterschirm (360) aufweist mit wenigstens einem Stülpring (362) aus einem elastomeren Werkstoff.

16. Pipelinereparatur-Hilfsvorrichtung (300) nach Anspruch 14 oder 15, **dadurch gekennzeichnet, daß** der Trichterschirm (360) über ein Kniehebelgestänge (364, 365) ein- und ausfaltbar ist.

## Claims

1. Auxiliary device for pipeline repairs (100; 200; 300) for sealing a damaged spot (5) in the pipeline wall (4) of a circularly-shaped pipeline against the fluid flowing in the pipeline (3),
with one base element (22; 322) consisting of at least one by-pass lead-pipe (28; 328) which is capable of containing the fluid-flow in an axial direction to the pipeline (3) and whose circumferential radius (22; 322) is smaller than the internal radius of the pipeline wall (4),
and whose by-pass lead-pipe (28; 328) is fitted with means of regulating the flow-resistance of the auxiliary device for pipeline repairs, in such a way that the auxiliary device for pipeline repairs is displaceable by the fluid flowing in the pipeline and path control is enabled, with which the flow-resistance is reduceable upon arrival at the damaged spot (5), in such a way that the auxiliary device for pipeline repairs stops at a pre-determined position, **characterized by** the fact that the base element is formed as a sealing module (20, 320) with at least two radially expandable sealing collars (24, 25; 324, 325) arranged in a parallel manner with a gap in-between and connected to one another through the base element (22), and pressed against the internal side of the pipeline wall (4) in a friction-contacting and pressure-tight manner in the expanded state,
whereby the circumferential radius (22; 322) of the by-pass lead-pipe is smaller than the external radius of the expanded sealing collars (24, 25; 324, 325) in such a way that a working (8) space sealed in a pressure-tight manner is formable between the interior of the pipeline wall (4) and the external circumference of the base element.

2. Auxiliary device for pipeline repairs (100) according to patent claim 1, **characterized by** the fact that an auxiliary device for pipeline repairs (100) is fitted with at least one locking element positioned within the working space (8) and / or a lock-absorbing facility (29) for the interlocking fixation in or on the pipeline wall (4).

3. Auxiliary device for pipeline repairs (100) according to patent claim 2, **characterized by** the fact that the locking element is a run-out bolt which is arrestable in a compatible lock-absorbing facility in the pipeline wall (4).

4. Auxiliary device for pipeline repairs (100; 200; 300) according to one of the patent claims 1 to 5, **characterized by** the fact that the auxiliary device for pipeline repairs made of at least one sealing module (20, 320) and comprising one conveyance module (40; 240; 340) connected to it in a flexible manner or manufactured with it as one unit with a by-pass lead-pipe (48; 248; 348).

5. Auxiliary device for pipeline repairs (100; 200; 300) according to one of the patent claims 1 to 5, **characterized by** the fact that the conveyance module (40; 240; 340) and/or the sealing module (20; 320) has at least two annular drive-guide-collars (26, 27, 46, 47; 246, 247) surrounding the base element.

6. Auxiliary device for pipeline repairs (100; 200; 300) according to patent claim 5, **characterized by** the fact that the diameter of the drive-guide-collars (26,27; 46, 47; 246, 247) corresponds with the internal diameter of the pipeline (3) in addition to an excess of 5% to 10%.

7. Auxiliary device for pipeline repairs (300) according to one of the patent claims 1 to 6, **characterized by** the fact that the conveyance module (340) and/or the sealing module (320) has or have at least two rows arranged with a gap in-between at the circumference of the base element (322) with at least two track-rollers each.

8. Auxiliary device for pipeline repairs (100) according to one of the patent claims 1 to 7, **characterized by** the fact that a window piston (50) is positioned in the by-pass lead-pipe (28) of the sealing module (20) and/or in the by-pass lead-pipe (48) of the conveyance module (40), which is made up of a piston plate (51) covering the cross-section area of the by-pass lead-pipe (28; 48) and a cylinder liner element (52) connected with it, and fitted with at least one window opening (53), whereby the window pistons (50) can be drawn out in an axial manner from the by-pass lead-pipe (28; 48) in such a way that at least, one window opening (53) lies at least partially outside the by-pass lead-pipe (28; 48) and an outflow of the fluid from the by-pass lead-pipe (28) is enabled.

9. Auxiliary device for pipeline repairs (200) according to one of the patent claims 1 to 7, **characterized by** the fact that the by-pass lead-pipe of the sealing module and/or the by-pass lead-pipe (248) of the conveyance module (240) has the following details:
- at least one window opening (253) and
- at least a piston (251) covering the cross-section area of the by-pass lead-pipe (248) which is displaceable along the axial extension of at least one window opening (253).

10. Auxiliary device for pipeline repairs (300) according to one of the patent claims 1 to 7, **characterized by** the fact that at least one butterfly-valve element (321) is positioned in the by-pass lead-pipe (328) of the sealing module (320) and/or in the by-pass lead-pipe (348) of the conveyance module (340), which is rotatable around an axis bedded in an angle of 45° to 90° to the middle axis of the by-pass lead-pipe (328).

11. Auxiliary device for pipeline repairs (300) according to patent claim 10, **characterized by** the fact that the butterfly valve element (321) has a disc-shape.

12. Auxiliary device for pipeline repairs (300) according to patent claim 10, **characterized by** the fact that the butterfly valve element (321) is hemispherical.

13. Auxiliary device for pipeline repairs (300) according to patent claim 10, **characterized by** the fact that the butterfly valve element (312) is made up of at least two segments of a ball with which the cross-section of the by-pass lead-pipe (328) is covered when the butterfly valve element (312) is closed and whose convex exteriors are pointed to the pipeline wall (4) in the open state.

14. Auxiliary device for pipeline repairs (100) according to one of the patent claims 1 to 13, **characterized by** the fact that the sealing module (20) has a reduction funnel (23) on its upstream-oriented end, whose external diameter amounts to 0.9 ... 1.0-fold of the internal diameter of the pipeline and whose internal diameter is equivalent to the internal diameter of the by-pass lead-pipe (28).

15. Auxiliary device for pipeline repairs (300) according to patent claim 14, **characterized by** the fact that the sealing module (320) has at least a motor-driven foldable and unfoldable funnel shield (360) with at least one slip ring (360) made of elastomer material.

16. Auxiliary device for pipeline repairs (300) according to patent claim 14 or 15, **characterized by** the fact that the funnel shield (360) is foldable and unfoldable through a toggle lever (364, 365).

## Revendications

1. Dispositif auxiliaire pour la réparation de pipelines (100; 200; 300) pour l'étanchement d'un point défectueux (5) dans la paroi d'un pipeline (4) circulaire au fluide s'écoulant dans ce pipeline (3),
comprenant un élément de base (22; 322) et au moins une dérivation (28; 328), par laquelle le fluide peut s'écouler dans la direction axiale du pipeline (3), et qui a un rayon (22; 322) inférieur au rayon intérieur du pipeline (3),
la dérivation (28; 328) étant équipée de moyens pour régler la résistance à l'écoulement du dispositif auxiliaire pour la réparation de pipelines, moyens assurant la propulsion du dispositif auxiliaire pour la réparation de pipelines grâce au fluide s'écoulant dans le pipeline et permettant de le diriger lors de son passage. Ainsi, lors de l'arrivée du dispositif auxiliaire pour la réparation de pipelines au point défectueux (5), la résistance à l'écoulement peut être réduite jusqu'à son arrêt au point prédéterminé, **caractérisé par le fait qu'**il est composé d'un élément de base faisant fonction de module d'étanchement (20, 320) avec au moins deux coupelles d'étanchement (24, 25; 324, 325) expansibles dans le sens radial, fixées à distance l'une de l'autre sur l'élément de base (22), pressées sous pression et la tenant sur la paroi intérieure du pipeline (4) lorsqu'elles sont expansées,
le rayon (22; 322) de la dérivation étant inférieur au rayon extérieur des coupelles expansées (24, 25; 324, 325), et la pression dans l'espace de travail (8) ainsi formé pouvant être considérablement inférieure ou supérieure par rapport à la pression devant et derrière les coupelles d'étanchement.

2. Dispositif auxiliaire pour la réparation de pipelines (100) selon la revendication n° 1, **caractérisé par** l'équipement du dispositif auxiliaire pour la réparation de pipelines (100) avec un dispositif récepteur du dispositif de retenue sous forme d'un anneau en « U » (29), un segment d'anneau ou un alésage pour une immobilisation à engagement positif à l'aide d'une goupille (12) dans ou à travers la paroi du pipeline (4).

3. Dispositif auxiliaire pour la réparation de pipelines (100), (200), (300) selon l'une des revendications n° 1 ou 2, **caractérisé par le fait qu'**il est composé d'au moins un module d'étanchement (20, 320) et d'un module de transport (40), (240), (340) pourvu d'une dérivation (48), (248), (348) qui soit sont reliés par une articulation, soit forment un ensemble.

4. Dispositif auxiliaire pour la réparation de pipelines (100), (200), (300) selon l'une des revendications n° 1 à 3, **caractérisé par le fait qu'**il comporte au moins deux coupelles de propulsion et de guidage (26), (27), (46), (47), (246), (247) circulaires entourant l'élément de base sur le module de transport (40), (240), (340) et/ou sur le module d'étanchement (20), (320).

5. Dispositif auxiliaire pour la réparation de pipelines (100), (200), (300) selon la revendication n° 4, **caractérisé par** un diamètre des coupelles de propulsion et de guidage (26), (27), (46), (47), (246), (247) correspondant au diamètre intérieur du pipeline (3) plus une surmesure de 5 à 10%.

6. Dispositif auxiliaire pour la réparation de pipelines (300) selon l'une des revendications n° 1 à 5, **caractérisé par** l'équipement du module de transport (340) et/ou du module d'étanchement (320) avec au moins deux rangées de rouleaux, positionnées à distance dans le sens axial sur la circonférence du module de base (322).

7. Dispositif auxiliaire pour la réparation de pipelines (100) selon l'une des revendications n° 1 à 6, **caractérisé par** des rouleaux motorisés (45) servant à ajuster précisément la position finale du dispositif auxiliaire pour la réparation de pipelines (100).

8. Dispositif auxiliaire pour la réparation de pipelines (100) selon l'une des revendications n° 1 à 7, **caractérisé par** l'installation d'un piston à ouverture(s) (50) dans la dérivation (28) du module d'étanchement (20) et/ou dans la dérivation (48) du module de transport (40), se composant d'une plaque de piston (51) recouvrant la superficie de la section de la dérivation (28), (48), reliée à un élément de tube cylindrique (52), pourvue d'au moins une ouverture (53), le piston (50) pouvant être poussé hors la dérivation (28), (48) dans le sens axial, jusqu'à ce que l'ouverture (ou les ouvertures) (53) se trouve(nt) au moins partiellement en dehors de la dérivation (28), (48), et les fluides puissent sortir de la dérivation (28), (48).

9. Dispositif auxiliaire pour la réparation de pipelines (200) selon l'une des revendications n° 1 à 7, **caractérisé par** les détails suivants de la dérivation du module d'étanchement et/ou de la dérivation (248) du module de transport (240) : a) au moins une ouverture (253) et b) au moins un piston (251) recouvrant la superficie de la section de la dérivation (248), et pouvant être déplacé dans le sens axial le long de la ou des ouverture(s) (263).

10. Dispositif auxiliaire pour la réparation de pipelines (300) selon l'une des revendications n° 1 à 7, **caractérisé par** au moins un élément étrangleur (321) rotatif autour d'un axe qui se trouve dans un angle de 45° à 90° par rapport à l'axe central de la dérivation (328), ceci étant valable pour la dérivation (328) du module d'étanchement (320) et/ou pour la dérivation (348) du module de transport (340).

11. Dispositif auxiliaire pour la réparation de pipelines (300) selon la revendication n° 10, **caractérisé par** un élément étrangleur (321) sous forme de disque.

12. Dispositif auxiliaire pour la réparation de pipelines (300) selon la revendication n° 10, **caractérisé par** un élément étrangleur (321) sous forme d'hémisphère.

13. Dispositif auxiliaire pour la réparation de pipelines (300) selon la revendication n° 10, **caractérisé par** un élément étrangleur (312) composé d'au moins deux segments de sphère recouvrant la section de la dérivation (328) dans la position fermée de l'élément étrangleur (312), les côtés extérieurs convexes pointant vers la paroi du pipeline (4) dans la position ouverte de l'élément.

14. Dispositif auxiliaire pour la réparation de pipelines (100) selon l'une des revendications n° 1 à 13, **caractérisé par** un cône réducteur (23) sur le bout amont du module d'étanchement (20), avec un diamètre extérieur entre 0,9 et 1,0 fois le diamètre intérieur du pipeline et un diamètre intérieur qui correspond à celui de la dérivation (28).

15. Dispositif auxiliaire pour la réparation de pipelines (300) selon la revendication n° 14, **caractérisé par** un ou des écran(s) conique(s) (360) pliable(s) et dépliable(s) par moteur, muni(s) d'au moins un anneau à retournement (362) en élastomère installé(s) sur le module d'étanchement (320).

16. Dispositif auxiliaire pour la réparation de pipelines (300) selon les revendications n° 14 ou 15, **caractérisé par** la pliabilité de l'écran conique (360) à l'aide d'une tringlerie à genouillère (364), (365).
